# EUROPÄISCHE PATENTSCHRIFT

(11) **EP 2 249 688 B1**
(45) Veröffentlichungstag und Bekanntmachung des Hinweises auf die Patenterteilung: **01.05.2013**
(21) Anmeldenummer: 09713521.4
(22) Anmeldetag: 21.01.2009
(51) Int. Cl.: A47L 9/28

(54) **Staubsauger mit einer Vorrichtung zur automatischen Saugleistungsregelung**
Vacuum cleaner with a device for the automatic suction power regulation
Aspirateur avec und dispositif de régulation automatique de la puissance d'aspiration

(30) Priorität: 20.02.2008 DE 102008010068; 20.02.2008 DE 202008002310 U
(43) Veröffentlichungstag der Anmeldung: 17.11.2010
(73) Patentinhaber: BSH Bosch und Siemens Hausgeräte GmbH, 81739 München (DE)
(72) Erfinder: HAMM, Silvio, 98617 Sülzfeld (DE); HERRMANN, Rudolf, 97633 Sulzfeld (DE); ILLIG, Roland, 97618 Heustreu (DE); LEHMANN, Peter, 98617 Meiningen (DE); STREHLER, Thomas, 97616 Bad Neustadt (DE)
(86) Internationale Anmeldenummer: PCT/EP2009/050622
(87) Internationale Veröffentlichungsnummer: WO 2009/103585

(56) Entgegenhaltungen:
- EP-A- 0 379 680
- EP-A- 0 636 340
- EP-A- 0 678 271
- WO-A-97/07728
- DE-A1- 3 117 507
- DE-A1- 4 433 181
- DE-C2- 4 323 222

## Beschreibung

Die Erfindung betrifft einem Staubsauger mit einer Vorrichtung zur automatischen Saugleistungsregelung , dessen Motor-/Gebläseeinheit mit einer zugeordneter elektrischen oder elektronischen Regelschaltung angetrieben ist und dessen Staubabscheideeinheit eine Saugdüse vorgelagert ist.

Saugleistungsverluste z.B. durch das Verschließen der Filterbeutel-Poren eines Staubsauger erfordern bei einer Vielzahl bekannter Staubsauger ein händisches bzw. manuelles Nachregeln der Saugleistung, womit zumeist eine Überregelung und damit Energieverschwendung einhergeht. Bekannte Regeleinrichtungen tragen dem bislang wenig Rechnung:

Die EP 0 636 340 A1 offenbart welche dem Oberbegriff des unabhängigen Anspruchs 1 entspricht, offenbart einen Staubsauger eine Vorrichtung zur automatischen Sauleistungsregelung, dessen Motor-/Gebläseeinheit mit zugeordneter elektrischen oder elektronischen Regelschaltung angetrieben ist und dessen Staubabscheideeinheit eine Saugdüse vorgelagert ist. Die Vorrichtung umfasst mit einem ersten Drucksensor zur Erfassung eines von der Motor-/Gebläseeinheit erzeugten, an der Staubabscheideeinheit anliegenden Unterdrucks, sowie einen zweiten Drucksensor zur Erfassung eines an der Saugdüse anliegenden Unterdrucks.

Aus der EP 0 678 271 B1 beispielsweise ist eine Schaltungsanordnung zur Saugleistungsregelung eines Staubsaugers bekannt, dessen Gebläsemotor ein mittels einer Ansteuerschaltung steuerbares Halbleiterschaltelement zugeordnet ist, bei welcher Schaltungsanordnung die Ansteuerschaltung einen Vergleicher enthält, dem ein sich periodisch veränderndes Signal und ein einstellbares Steuersignal zugeführt ist und aus dessen Ausgangssignal die Steuerimpulse für das Halbleiterelement gebildet sind, und das Steuersignal für die Ansteuerschaltung wahlweise von Hand jeweils auf einen bestimmten Wert einstellbar oder mittels eines Druckschalters zwischen zwei vorgegeben, unterschiedlichen Werten umschaltbar ist. Nachteilig an dieser Schaltungsanordnung ist einerseits, dass die Saugleistungsregelung unabhängig von der Bodenbeschaffenheit geregelt wird und andererseits den Füllgrad von dem Staubbehälter nicht berücksichtigt.

Aus der DE 43 23 222 C2 ist ein Verfahren zur Füllgradanzeige des Staubfilterbeutels in einem Staubsauger bekannt, bei dem der Staubfilterbeutel im Saugluftstrom des Gebläsemotors in einem Aufnahmeraum des Staubsaugergehäuse angeordnet ist und zur Füllgradanzeige der zwischen dem Innen- und Außenraum bzw. dem Aufnahmeraum des Staubfilterbeutels im Staubsauger herrschende Differenzdruck gemessen und die Anzeigeeinrichtung in Abhängigkeit von dem Druckunterschied gesteuert wird, wobei an verschiedenen Messstellen innerhalb des Aufnahmeraums der Unterdruck gemessen und hieraus ein weiterer Differenzdruckwert zwischen den Messstellen im Aufnahmeraum ermittelt und mit dem zwischen dem Innen- und Aufnahmeraum des Staubfilterbeutels herrschenden Differenzdruckwert verglichen wird, so dass die Anzeige des Füllgrades des Staubfilterbeutels in Abhängigkeit von diesem Vergleichswert gesteuert wird. Nachteilig an einer solchen Anordnung ist, dass mit der vorgeschlagenen Differenzdruckmessung lediglich ein Signal zur Auswertung von dem Staubbeutelfüllgrad abgegriffen wird.

Aus der DE 31 17 507 C2 ist eine Vorrichtung zur automatischen Saugleistungssteuerung bekannt für einen Motor mit elektrischer oder elektronischer Drehzahlsteuerung, ein von diesem angetriebenes Gebläse und einen Staubbeutel aufweisenden Staubsauger, wobei auf das Ausmaß des von dem Staubsauger erzeugten Unterdrucks ansprechenden Verstellmitteln für die Drehzahlsteuerung vorgesehen ist, wobei mindestens ein Unterdruckschalter im Unterdruckbereich des Staubsaugers angeordnet ist, der mindestens zwei verschiedene, unterschiedliche Unterdrücke entsprechende diskrete Schaltstellung aufweist, und wobei der Unterdruckschalter je nach Ausmaß des einwirkenden Unterdrucks abgestuft eine elektrische Kontaktgabe zur Drehzahlsteuerung durch Umschaltung erfolgt. Nachteilig an einer solchen Anordnung ist, dass mit der vorgeschlagenen Anordnung kein Füllgrad von dem Staubbeutel berücksichtigt wird.

Weiterhin sind bei Staubsauger Regeleinrichtungen bekannt, bei denen mit einem Drucksensor und einer hinterlegten Gerätekennlinie die Saugleistung in Abhängigkeit von dem Füllgrad der Staubabscheideinheit nachgeregelt wird. Nachteilig an einer solchen Regeleinrichtung ist, dass sich bei einem Wechsel der Saugdüse von einem glatten Boden auf einen weichen Bodenbelag die Schiebekraft der Saugdüse wesentlich erhöht. Hier wird z. B. auf die EP 0 379 680 B1 verwiesen.

Der Erfindung liegt die Aufgabe zugrunde, die Nachteile der bekannten Saugleistungsregulierungen zu beseitigen. Insbesondere soll ein Staubsauger mit Vorrichtung bereitgestellt werden, welche dem Benutzer an der Saugdüse eine annähernd konstante Saugleistung bereitstellt, weitgehend unabhängig von dem jeweiligen Füllgrad der Abscheideeinheit und/oder vom Bodenbelag.

Die Lösung der gestellten Aufgabe gelingt durch die Merkmale des Anspruchs 1. Vorteilhafte Aus- und Weiterbildungen, welche einzeln oder in Kombination miteinander eingesetzt werden können, sind Gegenstand der abhängigen Ansprüche.

Die Erfindung betrifft einen Staubsauger, insbesondere einen Bodenstaubsauger, der eine Vorrichtung mit einer Elektronik für eine automatische Saugleistungsregelung besitzt, dessen Gebläse von einem Elektromotor - im Folgenden als Motor-/Gebläseeinheit bezeichnet - mit zugeordneter elektrischer oder elektronischer Regelschaltung angetrieben ist und dessen Staubabscheideeinheit eine Saugdüse vorgelagert ist; mit einem ersten Drucksensor zur Erfassung eines von der Gebläse-Motor-Einheit erzeugten, an der Staubabscheideeinheit anliegenden Unterdrucks, der zusammen mit der Regelschaltung einen ersten Regelkreis bildet, um auf der Basis des Signals des ersten Drucksensors den nach hinter der Staubabscheideeinheit anliegenden Unterdrucks auf einem vorgegebenen Wert zu halten, einen zweiten Drucksensor zur Erfassung eines an der Saugdüse anliegenden Unterdrucks, der zusammen mit der Regelschaltung einen zweiten Regelkreis bildet, um auf der Basis des Signals des zweiten Drucksensors den an der Saugdüse anliegenden Unterdruck unterhalb eines vorgegebenen Werts zu halten, wobei die Regelschaltung, sobald sich das Signal des zweiten Drucksensors einem oberen Schwellwert nähert, die vom ersten Regelkreis geregelte Saugleistung zunächst verringert und wobei die Regelschaltung, sobald sich das Signal des zweiten Drucksensors einen unteren Schwellwert nähert, die vom ersten Regelkreis geregelte Saugleistung zunächst erhöht.

Vorzugsweise erfolgt die Verringerung bzw. die Erhöhung der Saugleistung in Abhängigkeit des Signalabstandes des zweiten Drucksensors zu den Schwellwerten. Dies gestattet vorteilhaft, die Schwellwerte als Band mit einer vorgebbaren Regelbreite auszubilden.

Ebenso kann es vorteilhaft sein, wenn der obere und der untere Schwellwert für den zweiten Drucksensor in Abhängigkeit von den an der Saugdüse anliegenden Unterdruck entsprechend angehoben oder abgesenkt wird. Insbesondere erfolgt die Schwellwertänderung vorzugsweise in Abhängigkeit eines erkannten Bodenbelages.

Zweckmäßiger Weise deaktiviert die Regelschaltung den ersten Regelkreis, sobald das Signal des zweiten Drucksensors den oberen Schwellwert überschreitet. Sobald das Signal des zweiten Drucksensors den unteren Schwellwert unterschreitet, wird der erste Regelkreis und/oder aktiviert diesen (wieder).

Der erste Drucksensor ist bevorzugt in einem Ansaugkanal vor der Gebläse-Motor-Einheit angeordnet.

Der zweite Drucksensor kann in einem der Staubabscheideeinheit vorgelagerten Anschlussstutzen; in einem Handgriff oder - bevorzugt - in der Saugdüse selbst angeordnet sein.

Insbesondere unter Kostenaspekten kann als zweiter Drucksensor auch ein Druckschalter Verwendung finden.

Eine weiter bevorzugte Ausführungsform der Erfindung besteht darin, dass die maximale Leistungsabgabe der Regelschaltung durch eine manuelle Leistungsverstellung in unterschiedlichen Stufen oder auch stufenlos über einen Leistungsregler vorgewählt werden kann. So kann an dem Staubsauger ein Leistungsbereich gewählt werden, der auch zur Reinigung von sensiblen Oberflächen geeignet ist.

Vorteilhaft ist ferner, wenn in der Regelschaltung die gerätespezifische Kennlinie von der Motor-/Gebläseeinheit mit dem Staubsauger abgelegt ist. Dadurch werden bereits kleine Abweichungen an den Drucksensoren richtig interpretiert.

Anstatt gewöhnlich mit einer statischen Düse kann der Staubsauger auch mit einer dynamischen (angetriebenen) Düse ausgestattet sein. Dadurch ergibt sich die Möglichkeit, dieser ein Bodenbelagsdetektionsmittel zuzuordnen, welches mittels Stromüberwachung eine zusätzliche Bodenbelagserkennung gestattet. Diesbezüglich sei vollumfänglich auf die ältere Anmeldung DE 10 2007 021 299.4 verwiesen. Dieses zum Signal des zweiten Drucksensors alternative oder zusätzliche der Regeleinrichtung zugeführte Signal gestattet vorteilhaft eine noch feinere automatische Saugleistungsregelung. Insbesondere kann hierüber die Schwellwertänderung und/oder die diesbezügliche Regelbandbreite bedarfsgerecht variiert werden.

Schließlich hat sich bewährt, über den an unterschiedlichen Messstellen gemessen Unterdruck einen Rückschluss auf den Füllgrad von der Staubabscheideeinheit zu ziehen und dieses Ergebnis optisch und/oder akustisch anzuzeigen.

Der vorliegenden Erfindung liegt die Idee zugrunde, zwei Drucksensoren zu verwenden, welche auf der einen Seite den an der Düse anliegenden Unterdruck und auf der anderen Seite den Unterdruck an der Ansaugseite von den an der Gebläseeinheit anliegenden Unterdruck ermitteln, und je einen eigenständigen Regelkreis bilden, wobei eine übergeordnete Regelschaltung entscheidet, welche der beiden Regelkreise die Haupt-Steuerung über die Gebläseleistung übernimmt. Vorzugsweise sind die Drucksensoren als Unterdrucksensoren ausgebildet und geben lineare Ausgangssignale an die Elektronik ab.

Durch die Erfindung wird insbesondere sichergestellt, dass der von dem Anwender variabel manuell eingestellte Leistungsbereich während des Saugvorgangs automatisch auf eine nahezu konstante Saugleistung an der Saugdüse beibehalten bleibt. Unabhängig von dem Füllgrad der Staubabscheideinheit wird eine von dem Anwender spürbare Saugleistung an der Düse weitgehend konstant gehalten. Ebenso passt sich die Saugleistung automatisch an unterschiedliche Bodenbeläge an. So wird bei einem Wechsel auf einen Hartboden die Gebläseleistung reduziert, wohingegen die Gebläseleistung bei einem Wechsel auf einen Teppich erhöht wird. Ein manuelles Verändern von dem Leistungsbereich ist somit nicht mehr notwendig. Die Vorrichtung ermöglicht durch die Erfassung unterschiedlicher Unterdrücke eine genaue Aufnahme der unterschiedlichen Betriebszustände und erwirkt mit der Regelschaltung eine präzise Nachregelung der Saugleistung.

Die erfindungsgemäße Vorrichtung für einen Staubsauger führt jeweils nur so viel an elektrischer Leistung der Motor-/Gebläseeinheit zu, wie zu einer optimalen Reinigung der anstehenden Bodenoberfläche benötigt wird und es die jeweiligen Betriebszustände des Staubsaugers erfordern und somit die Vorrichtung eine energieeffiziente Anwendung gewährleistet. Sie sichert so eine gleichbleibende Reinigungswirkung über die Gebrauchsdauer von dem Staubsauger. Da eine immer gleichbleibende Saugleistung an der Saugdüse anliegt, werden Staub- und Schmutzpartikel immer mit einer konstant anliegenden Saugleistung aufgenommen und der Staubabscheideeinheit zugefördert. Diese Ausprägung schont auch die zu reinigenden Oberflächen vor zu großer Reinigungsbeanspruchung.

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Darin zeigen schematisch:
- Fig. 1: einen Staubsauger in Form von einem Bodenstaubsauger;
- Fig. 2: ein Blockschaltbild der Vorrichtung, welche in einem Staubsauger verwendet wird; und
- Fig. 3: ein stilisiertes Diagramm von einem Unterdruckverlauf an dem zweiten Drucksensor bei unterschiedlichen Betriebszuständen.

Bei der nachfolgenden Beschreibung der bevorzugten Ausführungsformen der vorliegenden Erfindung bezeichnen gleiche Bezugszeichen gleiche oder vergleichbare Komponenten.

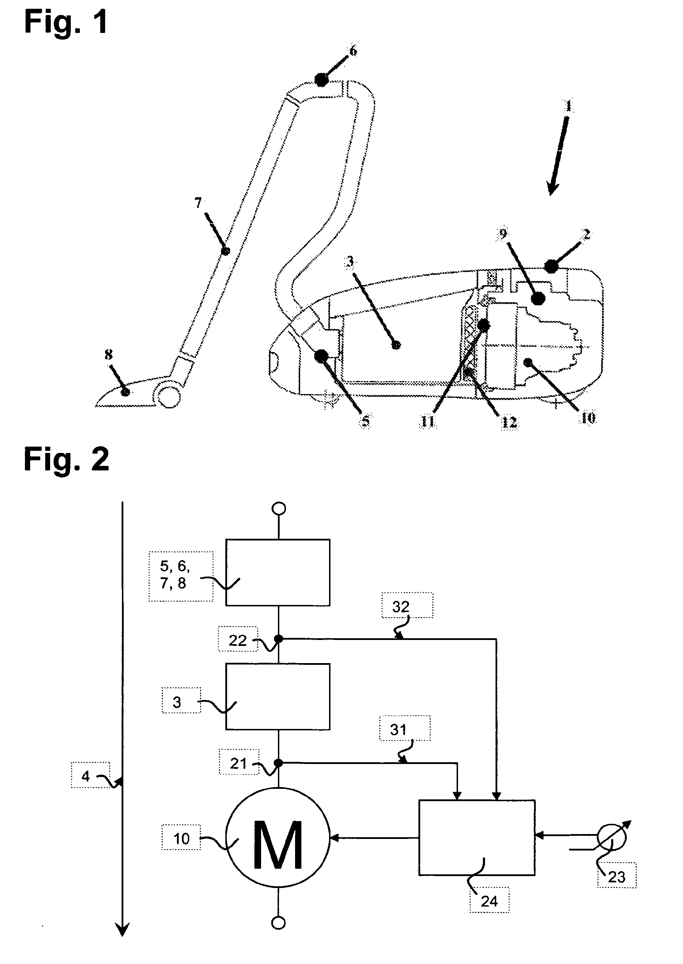

Fig. 1 zeigt schematisch einen Staubsauger 1, hier ein Bodenstaubsauger, mit einem Staubsaugergehäuse 2 und einer darin angeordneten Staubabscheideeinheit 3, welche im Saugluftstrom 4 liegt, und über einen Anschlussstutzen 5 und einem flexiblen Saugschlauch mit einem Handgriff 6 über eine längenvariable Rohrverbindung 7 mit einer Saugdüse 8 verbunden ist. In einem Motor-/Gebläseraum 9, worin eine Motor-/Gebläseeinheit 10 liegt, ist der Motor-/Gebläseeinheit 10 gewöhnlich ein Motorschutzfilter 12 vorgelagert.

Eine Staubabscheideeinheit 3 steht in der Beschreibung sowohl für einen bekannten Staubfilterbeutel, als auch für eine sogenannte beutellose (bagless) Einheit. Durch den im Saugbetrieb aufgenommen Feinstaub werden die Poren des Staubfilterbeutels zunehmend zugesetzt oder verstopft, und dadurch der innere Luftwiderstand erhöht. Gleiches gilt annähernd auch für die sog. bagless Einheit.

Die Saugleistung P2 eines Staubsaugers hängt im Wesentlichen von zwei Größen ab. Einerseits von der von dem Saugmittel erzeugten Unterdruck [mbar] und andererseits von dem geförderten Luftstrom [I/s]. Die Saugleistung P2 von einem Staubsauger ist somit das Produkt aus Unterdruck und Luftvolumenstrom und ändert sich proportional mit diesen beiden Bezugsgrößen. Die Saugleistung P2 wird mit der Menge des eingesaugten Schmutzes reduziert, da die zugesetzten Poren des Staubfilterbeutels allmählich weniger Luft hindurch lassen. Die Folge ist ein Anstieg des Unterdrucks in dem Aufnahmeraum der Staubabscheideinheit 3.

Fig. 2 zeigt schematisch als Blockschaltbild die übergeordnete Regelschaltung 24 mit zwei Regelkreisen 31 und 32, sowie dazugehörigen Drucksensoren 21 und 22. Der anliegende Unterduck wird von einem ersten Drucksensor 21 erfasst und als elektrisches Signal an die Regelschaltung 24 weitergeleitet. Vorzugsweise ist der erste Drucksensor 21 in dem Ansaugkanal 11 von der Motor-/Gebläseeinheit 10 angeordnet. Dadurch wird zusätzlich das vorgeschaltete Motorschutzfilter 12 mit in den ersten Regelkreis 31 aufgenommen. Der erste Regelkreis 31 erhöht die Leistung an die Motor-/Gebläseeinheit 10, wenn der Staubfilterbeutel einen erhöhten Luftwiderstand aufweist und dadurch ein erhöhter Unterdruck an dem ersten Drucksensor 21 gemessen wird. Eine derartige Veränderung der Leistungsregelung für die Motor-/Gebläseeinheit 10 tritt auch ein, falls in dem der Staubabscheideinheit 3 vorgelagerte Saugluftstrom 4 eine Widerstandsänderung erfährt. Ein Beispiel hierfür ist auch ein Wechsel der Saugdüse 8 von einem Hartboden auf einen Teppich. Die Teppichborsten erschweren einen Luftdurchtritt an der Saugdüse 8 und an dem ersten Drucksensor 21 erhöht sich der Unterdruck. Bei einem Wechsel der Saugdüse 8 von einem Teppich auf einen Hartboden sinkt der Unterdruck an dem ersten Drucksensor, es kann mehr Saugluft durch die Saugdüse 8 strömen, und der erste Regelkreis 31 reduziert daraufhin die Leistung an die Motor-/Gebläseeinheit 10.

Ein zweiter Drucksensor 22 erfasst den Unterdruck in dem Luftstrom 4 an einer Stelle, die der Staubabscheideeinheit 3 vorgelagert ist. Dieser zweite Drucksensor 22 kann in dem Luftstrom 4 alternativ in dem Anschlussstutzen 5, dem Handgriff 6, der Rohrverbindung 7 oder auch direkt in der Saugdüse 8 angebracht sein. Es ist nicht erforderlich, die Unter-Drucksensoren 21, 22 auch körperlich an den genannten Stellen anzuordnen. Es genügt, wenn über kleine Verbindungsschläuche der Unterdruck an diesen Stellen abgenommen und den jeweiligen Drucksensoren 21 bzw. 22 zuführt wird, die an anderer Stelle, auch in separaten kleinen Gehäuse geschützt eingekapselt sein können. Erreicht der Unterdruck an dem zweiten Drucksensor 22 einen zu hohen Unterdruck, so wird die Regelschaltung 24 derart aktiviert, dass die Leistungsabgabe an die Motor-/Gebläseeinheit 10 reduziert wird, demzufolge der anstehende Unterdruck an dem zweiten Drucksensor 22 sich einem unteren Schwellwert 42 annähert. Eine solche Unterdruckerhöhung an dem zweiten Drucksensor 22 liegt vor, wenn beispielsweise sich die Saugdüse 8 auf einem Teppich festsaugt. Der zweite Regelkreis 32 bleibt solange aktiv, bis der Unterdruckwert an dem zweiten Drucksensor 22 sich wieder einem unteren Schwellwert 42 angenähert hat.

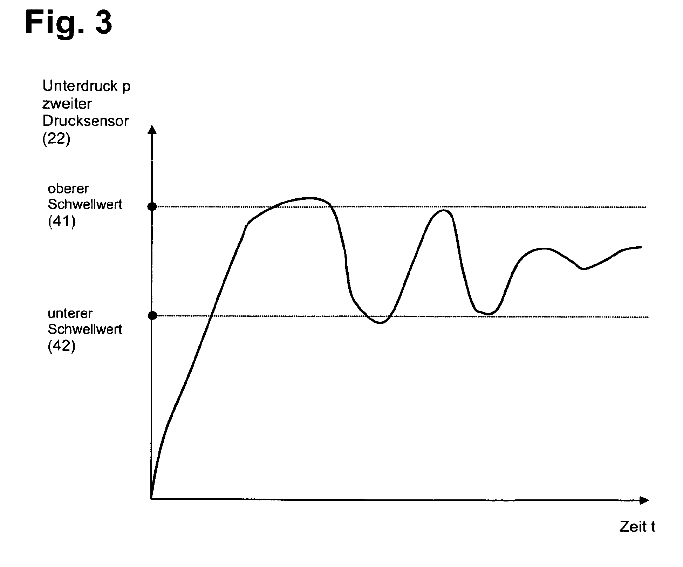

Fig. 3 zeigt einen typischen Unterdruckverlauf von dem zweiten Drucksensor 22 wenn der Luftstrom 4 an der Saugdüse 8 behindert ist. Der Unterdruck steigt kontinuierlich an. Bei Annäherung an den oberen Schwellwert 41 wird bereits die Leistungsabgabe an die Motor-/Gebläseeinheit 10 reduziert. Nachdem der obere Schwellwert 41 überschritten ist, wird die Leistung an der Motor-/Gebläseeinheit 10 stark zurückgefahren und der untere Schwellwert 42 wird unterschritten. Hier wird wieder der erste Regelkreis 31 aktiviert und die Leistung an die Motor-/Gebläseeinheit 10 so lange erhöht bis der obere Schwellwert 41 bzw. ein eingeschwungener Regelzustand erreicht wird.

Die erfindungsgemäße Vorrichtung für einen Staubsauger 1 führt vorteilhaft jeweils nur so viel an elektrischer Leistung der Motor-/Gebläseeinheit 10 zu, wie zu einer optimalen Reinigung der anstehenden Bodenoberfläche benötigt wird und es die jeweiligen Betriebszustände des Staubsaugers 1 erfordern und somit die Vorrichtung einen energieeffiziente Anwendung gewährleistet. Sie sichert so eine gleichbleibende Reinigungswirkung über die Fülldauer von einem Staubbeutel von dem Staubsauger 1. Da eine nahezu immer gleichbleibende Saugleistung an der Saugdüse 8 anliegt, werden Staub- und Schmutzpartikel immer mit einer konstant anliegenden Saugleistung aufgenommen und einer Staubabscheideeinheit 3 zugefördert. Diese Ausprägung schont auch die zu reinigenden Oberflächen vor zu großer Reinigungsbeanspruchung.

### Bezugszeichenliste

- 1: Staubsauger
- 2: Staubsaugergehäuse
- 3: Staubabscheideeinheit
- 4: Saugluftstrom
- 5: Anschlussstutzen
- 6: Handgriff
- 7: Rohrverbindung
- 8: Saugdüse
- 9: Motor-/Gebläseraum
- 10: Motor-/Gebläseeinheit
- 11: Ansaugkanal
- 12: Motorschutzfilter
- 21: erster Drucksensor
- 22: zweiter Drucksensor
- 23: manuelle Leistungsverstellung
- 24: Regelschaltung
- 31: erster Regelkreis
- 32: zweiter Regelkreis
- 41: oberer Schwellwert
- 42: unterer Schwellwert

## Patentansprüche

1. Staubsauger (1) mit einer Vorrichtung zur automatischen Saugleistungsregelung, dessen Motor-/Gebläseeinheit (10) mit zugeordneter elektrischen oder elektronischen Regelschaltung (24) angetrieben ist und dessen Staubabscheideeinheit (3) eine Saugdüse (8) vorgelagert ist; mit
- einem ersten Drucksensor (21) zur Erfassung eines von der Motor-/Gebläseeinheit (10) erzeugten, an der Staubabscheideeinheit (3) anliegenden Unterdrucks, der zusammen mit der Regelschaltung (24) einen ersten Regelkreis (31) bildet, um auf der Basis des Signals des ersten Drucksensors (21) den an der Staubabscheideeinheit (3) anliegenden Unterdrucks auf einem vorgegebenen Wert zu halten,
- einen zweiten Drucksensor (22) zur eines an der Saugdüse (8) anliegenden Unterdrucks, der zusammen mit der Regelschaltung (24) einen zweiten Regelkreis (32) bildet, um auf der Basis des Signals des zweiten Drucksensors (22) den an der Saugdüse (8) anliegenden Unterdruck unterhalb eines vorgegebenen Werts zu halten,
- wobei die Regelschaltung (24), sobald das Signal des zweiten Drucksensors (22) sich einem oberen Schwellwert (41) nähert, die vom ersten Regelkreis (31) geregelte Saugleistung zunächst verringert und wobei die Regelschaltung (24), sobald das Signal des zweiten Drucksensors (22) sich einen unteren Schwellwert (42) nähert, die vom ersten Regelkreis (31) geregelte Saugleistung zunächst erhöht.

2. Staubsauger (1) nach Anspruch 1, **dadurch gekennzeichnet, dass** die Verringerung bzw. die Erhöhung der Saugleistung in Abhängigkeit des Signalabstandes des zweiten Drucksensors (22) zu den Schwellwerten erfolgt.

3. Staubsauger (1) nach Anspruch 1 oder 2, **dadurch gekennzeichnet, dass** die Regelschaltung (24), sobald das Signal des zweiten Drucksensors (22) den oberen Schwellwert (41) überschreitet den ersten Regelkreis (31) deaktiviert und/oder wobei die Regelschaltung (24), sobald das Signal des zweiten Drucksensors (22) den unteren Schwellwert (42) unterschreitet, den ersten Regelkreis (31) aktiviert.

4. Staubsauger (1) nach einem der vorhergehenden Ansprüche, **dadurch gekennzeichnet, dass** sich der obere (41) und der untere Schwellwert (42) für den zweiten Drucksensor (22) in Abhängigkeit von den an der Saugdüse (8) anliegenden Unterdruck entsprechend angehoben oder abgesenkt wird.

5. Staubsauger (1) nach einem der vorhergehenden Ansprüche, **dadurch gekennzeichnet, dass** der erste Drucksensor (21) in einem Ansaugkanal (11) vor der Gebläse-Motor-Einheit (10) angeordnet ist.

6. Staubsauger (1) nach einem der Ansprüche 1 bis 5, **dadurch gekennzeichnet, dass** der zweite Drucksensor (22) in einem, der Staubabscheideeinheit (3) vorgelagerten Anschlussstutzen (5) angeordnet ist.

7. Staubsauger (1) nach einem der Ansprüche 1 bis 5, **dadurch gekennzeichnet, dass** der zweite Drucksensor (22) in einem Handgriff (6) angeordnet ist.

8. Staubsauger (1) nach einem der Ansprüche 1 bis 5, **dadurch gekennzeichnet, dass** der zweite Drucksensor (22) in der Saugdüse (8) angeordnet ist.

9. Staubsauger (1) nach einem der vorhergehenden Ansprüche, **dadurch gekennzeichnet, dass** der zweite Drucksensor (22) ein Druckschalter ist.

10. Staubsauger (1) nach einem der vorhergehenden Ansprüche, **dadurch gekennzeichnet, dass** die maximale Saugleistung der Regelschaltung (24) über eine manuelle Leistungsverstellung (23) begrenzt werden kann.

11. Staubsauger (1) nach einem der vorherigen Ansprüche, **dadurch gekennzeichnet, dass** in der Regelschaltung (24) die gerätespezifische Kennlinie von der Motor-/Gebläseeinheit des Staubsaugers abgelegt ist.

12. Staubsauger (1) nach einem der vorherigen Ansprüche, **dadurch gekennzeichnet, dass** als Saugdüse (8) eine elektrisch angetriebene Bürste vorgesehen ist, welcher ein Bodenbelagsdetektionsmittel zugeordnet ist, dessen Signal alternativ oder zusätzlich zum Signal des zweiten Drucksensors (22) der Regeleinrichtung (24) zuführbar ist.

13. Staubsauger (1) nach einem der vorherigen Ansprüche, **dadurch gekennzeichnet, dass** in Abhängigkeit der Drucksignale der Füllgrad der Staubabscheideeinheit (3) optisch und/oder akustisch anzeigbar ist.

## Claims

1. Vacuum cleaner (1) with a device for automatic suction power regulation, the motor/fan unit (10) of which vacuum cleaner is driven by associated electrical or electronic regulating circuitry (24) and upstream of the dust separating unit (3) of which vacuum cleaner is mounted a suction nozzle (8), comprising:
- a first pressure sensor (21) for detecting a sub-atmospheric pressure, which is generated by the motor/fan unit (10) and prevails at the dust separating unit (3) and which together with the regulating circuitry (24) forms a first regulating circuit (31) in order to keep, on the basis of the signal of the first pressure sensor (21), the sub-atmospheric pressure prevailing at the dust suction unit (3) to a predetermined value,
- a second pressure sensor (22) for detecting a sub-atmospheric pressure, which prevails at the suction nozzle (8) and which together with the regulating circuitry (24) forms a second regulating circuit (32) in order to keep, on the basis of the signal of the second pressure sensor (22), the sub-atmospheric pressure prevailing at the suction nozzle (8) below a predetermined value,
- wherein the regulating circuitry (24) as soon as the signal of the second pressure sensor (22) approaches an upper threshold value (41) initially reduces the suction power regulated by the first regulating circuit (31) and wherein the regulating circuitry (24) as soon as the signal of the second pressure sensor (22) approaches a lower threshold value (42) initially increases the suction power regulated by the first regulating circuit (31).

2. Vacuum cleaner (1) according to claim 1, **characterised in that** the reduction or increase in the suction power is carried out in dependence on the signal spacing of the second pressure sensor (22) from the threshold values.

3. Vacuum cleaner (1) according to claim 1 or 2, **characterised in that** the regulating circuitry (24) deactivates the first regulating circuit (31) as soon as the signal of the second pressure sensor (22) exceeds the upper threshold value (41) and/or wherein the regulating circuitry (24) activates the first regulating circuit (31) as soon as the signal of the second pressure sensor (22) falls below the lower threshold value (42).

4. Vacuum cleaner (1) according to any one of the preceding claims, **characterised in that** the upper threshold value (41) and the lower threshold value (42) for the second pressure sensor (22) are correspondingly raised or lowered in dependence on the sub-atmospheric pressure prevailing at the suction nozzle (8).

5. Vacuum cleaner (1) according to any one of the preceding claims, **characterised in that** the first pressure sensor (21) is arranged in a suction channel (11) in front of the fan/motor unit (10).

6. Vacuum cleaner (1) according to any one of claims 1 to 5, **characterised in that** the second pressure sensor (22) is arranged in a connecting stub pipe (5) in front of the dust separating unit (3).

7. Vacuum cleaner (1) according to any one of claims 1 to 5, **characterised in that** the second pressure sensor (22) is arranged in a handle (6).

8. Vacuum cleaner (1) according to any one of claims 1 to 5, **characterised in that** the second pressure sensor (22) is arranged in the suction nozzle (8).

9. Vacuum cleaner (1) according to any one of the preceding claims, **characterised in that** the second pressure sensor (22) is a pressure switch.

10. Vacuum cleaner (1) according to any one of the preceding claims, **characterised in that** the maximum suction power of the regulating circuitry (24) can be limited by way of a manual power adjustment (23).

11. Vacuum cleaner (1) according to any one of the preceding claims, **characterised in that** the appliance-specific characteristic curve of the motor/fan unit of the vacuum cleaner is filed in the regulating circuitry (24).

12. Vacuum cleaner (1) according to any one of the preceding claims, **characterised in that** an electrically driven brush is provided as suction nozzle (8), a floor covering detection means, the signal of which can be supplied to the regulating device (24) alternatively or additionally to the signal of the second pressure sensor (22), being associated with the brush.

13. Vacuum cleaner (1) according to any one of the preceding claims, **characterised in that** the degree of filling of the dust separating unit (3) can be indicated optically and/or acoustically in dependence on the pressure signals.

## Revendications

1. Aspirateur (1) comprenant un dispositif de régulation automatique de la puissance d'aspiration dont l'unité moteur-ventilateur (10) est commandée par un circuit de régulation électrique ou électronique associé (24) et dont l'unité de séparation de poussière (3) est précédée d'une buse d'aspiration (8) ; comprenant
- un premier capteur de pression (21) pour la saisie d'une dépression produite par l'unité moteur-ventilateur (10), appliquée à l'unité de séparation de poussière (3), qui forme avec le circuit de régulation (24) une première boucle de régulation (31) pour maintenir à une valeur prédéfinie la dépression appliquée à l'unité de séparation de poussière (3) sur la base du signal du premier capteur de pression (21),
- un second capteur de pression (22) pour la saisie d'une dépression appliquée à la buse d'aspiration (8), qui forme avec le circuit de régulation (24) une seconde boucle de régulation (32) pour maintenir au-dessous d'une valeur prédéfinie la dépression appliquée à la buse d'aspiration (8) sur la base du signal du second capteur de pression (22),
- le circuit de régulation (24) diminuant d'abord la puissance d'aspiration régulée par la première boucle de régulation (31) dès que le signal du second capteur de pression (22) s'approche d'une valeur seuil supérieure (41) et le circuit de régulation (24) augmentant d'abord la puissance d'aspiration régulée par la première boucle de régulation (31) dès que le signal du second capteur de pression (22) s'approche d'une valeur seuil inférieure (42).

2. Aspirateur (1) selon la revendication 1, **caractérisé en ce que** la diminution resp. l'augmentation de la puissance d'aspiration s'effectue en fonction de l'écart entre le signal du second capteur de pression (22) et les valeurs seuil.

3. Aspirateur (1) selon la revendication 1 ou 2, **caractérisé en ce que** le circuit de régulation (24) désactive la première boucle de régulation (31) dès que le signal du second capteur de pression (22) dépasse la valeur seuil supérieure (41) et/ou le circuit de régulation (24) active la première boucle de régulation (31) dès que le signal du second capteur de pression (22) passe en dessous de la valeur seuil inférieure (42).

4. Aspirateur (1) selon l'une des revendications précédentes, **caractérisé en ce que** la valeur seuil supérieure (41) et la valeur seuil inférieure (42) pour le second capteur de pression (22) sont relevées ou abaissées comme il convient en fonction de la dépression appliquée à la buse d'aspiration (8).

5. Aspirateur (1) selon l'une des revendications précédentes, **caractérisé en ce que** le premier capteur de pression (21) est situé dans un canal d'aspiration (11) avant l'unité moteur-ventilateur (10).

6. Aspirateur (1) selon l'une des revendications 1 à 5, **caractérisé en ce que** le second capteur de pression (22) est situé dans une tubulure de raccordement (5) située avant l'unité de séparation de poussière (3).

7. Aspirateur (1) selon l'une des revendications 1 à 5, **caractérisé en ce que** le second capteur de pression (22) est situé dans une poignée (6).

8. Aspirateur (1) selon l'une des revendications 1 à 5, **caractérisé en ce que** le second capteur de pression (22) est situé dans la buse d'aspiration (8).

9. Aspirateur (1) selon l'une des revendications précédentes, **caractérisé en ce que** le second capteur de pression (22) est un interrupteur à poussoir.

10. Aspirateur (1) selon l'une des revendications précédentes, **caractérisé en ce que** la puissance d'aspiration maximale du circuit de régulation (24) peut être limitée par un réglage de puissance manuel (23).

11. Aspirateur (1) selon l'une des revendications précédentes, **caractérisé en ce que** la caractéristique spécifique à l'appareil de l'unité moteur-ventilateur de l'aspirateur est enregistrée dans le circuit de régulation (24).

12. Aspirateur (1) selon l'une des revendications précédentes, **caractérisé en ce que** l'on prévoit, en tant que buse d'aspiration (8), une brosse à commande électrique à laquelle est associé un moyen de détection de revêtements de sol, dont le signal peut être amené au dispositif de régulation (24) à la place signal du second capteur de pression (22) ou en plus de celui-ci.

13. Aspirateur (1) selon l'une des revendications précédentes, **caractérisé en ce que** le niveau de remplissage de l'unité de séparation de poussière (3) peut être indiqué de manière optique et/ou acoustique en fonction des signaux de pression.
